(19) Europäisches Patentamt / European Patent Office / Office européen des brevets

(11) **EP 3 785 069 B1**

(12) **FASCICULE DE BREVET EUROPEEN**

(45) Date de publication et mention de la délivrance du brevet:
**22.11.2023 Bulletin 2023/47**

(21) Numéro de dépôt: **19742822.0**

(22) Date de dépôt: **15.04.2019**

(51) Classification Internationale des Brevets (IPC):
*G02B 30/29* (2020.01)    *H04N 13/317* (2018.01)
*H04N 13/324* (2018.01)    *H04N 13/305* (2018.01)
*G02B 27/00* (2006.01)

(52) Classification Coopérative des Brevets (CPC):
**G02B 27/0093; G02B 30/29; H04N 13/305; H04N 13/317; H04N 13/324**

(86) Numéro de dépôt international:
**PCT/FR2019/050881**

(87) Numéro de publication internationale:
**WO 2019/207235 (31.10.2019 Gazette 2019/44)**

(54) **SYSTÈME ET PROCÉDÉ D'AFFICHAGE D'UNE IMAGE AUTO-STÉRÉOSCOPIQUE À N POINTS DE VUE SUR UN ÉCRAN D'AFFICHAGE MOBILE**

SYSTEM UND VERFAHREN ZUR ANZEIGE EINES AUTOSTEREOSKOPISCHEN BILDES MIT N-ANSICHTSPUNKTEN AUF EINEM MOBILEN BILDSCHIRM

SYSTEM AND METHOD FOR DISPLAYING AN AUTO-STEREOSCOPIC IMAGE WITH N VIEW POINTS ON A MOBILE DISPLAY SCREEN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.04.2018 FR 1853569**

(43) Date de publication de la demande:
**03.03.2021 Bulletin 2021/09**

(73) Titulaire: **Alioscopy**
**75020 Paris (FR)**

(72) Inventeurs:
• **ALLIO, Pierre**
  **75020 Paris (FR)**
• **MAINGREAUD, Flavien**
  **95450 Commeny (FR)**

(74) Mandataire: **Bringer IP**
**1, Place du Président Thomas Wilson**
**31000 Toulouse (FR)**

(56) Documents cités:
**EP-A1- 2 876 879        EP-A2- 2 717 247**
**WO-A1-2009/101558    WO-A1-2014/163214**
**GB-A- 2 415 850         US-A1- 2014 022 619**
**US-A1- 2016 150 220**

• **HONG H K ET AL: "Autostereoscopic multi-view 3D display with pivot function, using the image display of the square subpixel structure", DISPLAYS DEVICES, DEMPA PUBLICATIONS, TOKYO, JP, vol. 29, no. 5, 1 décembre 2008 (2008-12-01), pages 512-520, XP025589405, ISSN: 0141-9382, DOI: 10.1016/J.DISPLA.2008.06.001 [extrait le 2008-06-19]**

## Description

### 1. Domaine technique de l'invention

L'invention concerne un système et un procédé d'affichage auto-stéréoscopique. L'invention concerne plus particulièrement un procédé et un système d'affichage d'une image auto-stéréoscopique à N points de vue sur un écran d'affichage mobile en rotation autour d'un axe, réel ou virtuel, s'étendant perpendiculaire au plan d'affichage de l'écran.

### 2. Arrière-plan technologique

L'auto-stéréoscopie est une technique permettant l'affichage d'images en relief sans exiger le port de lunettes spéciales de la part de l'observateur. Cette technique est connue en elle-même, en particulier des documents de brevets WO2006/024764A1, WO2014/041504A1, WO2013/140363 A1, WO2014/016768 A1 au nom du demandeur.

La demande de brevet EP 2 876 879 A1 divulgue un procédé d'affichage d'une image auto-stéréoscopique sur un écran d'affichage comprenant une matrice de pixels surmontée d'un réseau lenticulaires impliquant l'utilisation d'un capteur optique de détection des yeux d'un observateur permettant de détecter l'inclinaison de la tête de l'observateur en face de l'écran pour permettre d'adapter l'affichage de l'image en fonction de cette inclinaison détectée.

D'une manière générale, une image auto-stéréoscopique est constituée d'une pluralité de bandes d'images élémentaires imbriquées selon un schéma de mixage prédéterminé, correspondant à des vues d'un même objet ou d'une même scène selon des points de vue différents. Un dispositif sélecteur, typiquement constitué par un réseau de lenticules cylindriques ou une barrière de parallaxe, est disposé devant l'écran d'affichage de manière à permettre la projection d'un couple d'images élémentaires correspondant à deux points de vue différents de la scène, respectivement vers les deux yeux de l'observateur, ce qui crée une impression de relief dans le cerveau de l'observateur.

L'un des inconvénients des techniques autostéréoscopiques connues réside dans le nombre important de points de vue qui sont nécessaires simultanément sur l'écran. En effet, contrairement aux technologies à lunettes où seuls deux points de vue sont nécessaires, l'auto-stéréoscopie nécessite un grand nombre de points de vue pour libérer l'observateur des contraintes de positionnement.

On peut considérer que dans le cadre de l'auto-stéréoscopie, c'est l'écran qui porte les lunettes. Il est connu qu'un bon compromis alliant une bonne résolution de l'écran, une qualité de l'image observée et une liberté de déplacement de l'observateur devant l'écran consiste à utiliser huit points de vue différents.

Le demandeur a déjà proposé un écran auto-stéréoscopique comprenant une matrice de pixels agencés par lignes et par colonnes, chaque pixel étant composé d'une pluralité de sous-pixels de couleurs différentes. L'écran est en outre surmonté d'un réseau de lenticules cylindriques identiques présentant chacune une focale configurée pour pouvoir renvoyer à l'infini les rayons lumineux qui proviennent de l'écran. La largeur des lentilles est approximativement égale à la largeur de 8 sous-pixels (dans la mesure où le demandeur préconise l'utilisation d'un seul sous-pixel par point de vue par lentille et par ligne horizontale au lieu d'un pixel). Cela étant, d'autres configurations sont possibles sans que cela ne modifie sensiblement l'effet procuré. Le pas du réseau de lenticules cylindriques est précisément calculé de telle sorte que l'observateur voit, à une distance prédéterminée de l'écran (dite distance de teinte plate, qui est par exemple fixée à 85cm), les images se succéder tous les 6,5cm (écart moyen entre les yeux, choisi comme base de calcul), grâce à l'effet loupe du réseau de lenticules.

Cet effet loupe résulte du fait qu'une lentille placée à la bonne distance (sa focale) grossit le sous-pixel qui se trouve dans l'alignement de son axe optique et de la pupille de l'oeil de l'observateur. Si la lentille grossit 8 fois, le sous-pixel vu à travers la lentille est perçu 8 fois plus large qu'il n'est en réalité et masque pour l'oeil qui en reçoit la lumière à travers cette lentille les 7 autres sous-pixels qui ne sont pas dans l'alignement décrit précédemment.

Ainsi, l'observateur ne perçoit qu'un huitième de la résolution de l'écran pour chaque oeil. Ces sous-pixels associés pour former une image ou un point de vue sont tous grossis 8 fois perpendiculairement à l'axe (génératrice) de la lentille, parallèle à la méridienne de la lentille cylindrique . Il reste les 7/8ème de la résolution pour y inscrire 7 autres points de vue selon la même méthode.

L'espace devant l'écran est alors divisé en zones de 52cm, appelées lobes, dans lesquelles on peut percevoir successivement les 8 points de vue tous les 6,5cm. Lorsque l'on quitte un lobe, on retrouve la succession des 8 points de vue identiques. En effet, les mêmes sous pixels sont observés par effets loupes avec le même réseau de lentilles décalé d'une lentille vers la droite, ou vers la gauche, par effet de parallaxe parce que le plan des pixels et le plan des centres optiques du réseau lenticulaire sont distants l'un de l'autre.

Ainsi, un observateur qui se déplace parallèlement au plan de l'écran à 85cm de celui-ci (dans le cas où la distance de teinte plate est fixée à 85 cm), de la position la plus à droite jusqu'à la position la plus à gauche (ou inversement) voit avec un seul oeil les points de vue se succéder tous les 6,5cm en série de 8 formant un lobe et encore les mêmes 8 formant le second lobe et ainsi de suite.

Les deux yeux de l'observateur étant écartés de 6,5cm en moyenne, lorsque l'œil droit voit un point de vue *n (n* étant compris entre 1 et 8 dans le cas d'un écran à 8 points de vue), l'oeil gauche voit le point de vue complémentaire en *n-1* ou *n+1* et l'observateur perçoit une image en relief. Quand il bouge vers la gauche ou vers la droite, ses yeux changent de position et donc de points de vue simultanément et la sensation demeure comme devant une scène réelle.

La majorité des dispositifs d'affichage d'images autostéréoscopiques comprennent un composant optique configuré pour être efficace selon une orientation prédéterminée de l'écran. En effet, les lentilles d'un réseau lenticulaire peuvent être soit sphériques soit cylindriques, et les barrières de parallaxes peuvent être constituées de petites zones transparentes en damier ou de lignes continues en alternance avec des lignes opaques. Dans le cas des lentilles cylindriques, l'effet loupe n'est effectif que dans le sens de la méridienne (perpendiculaire à la génératrice) et dans le cas des barrières de parallaxes, l'effet du masque fonctionne perpendiculairement aux lignes opaques et transparentes.

Mais le fait d'utiliser des lentilles sphériques fait perdre de la résolution dans les deux directions en même temps, ce qui pénalise gravement la qualité perçue. De plus, l'anisotropie de la structure de la dalle de pixels génère des moirés très importants dans le sens parallèle aux lignes qui se trouvent être continues, noires et souvent d'épaisseurs très importantes par rapport à la hauteur des pixels.

Il a donc toujours été préféré d'utiliser des lentilles cylindriques à axe presque vertical ou des barrières de parallaxe présentant une orientation équivalente.

Ainsi, pour séparer les points de couleurs par effet loupe (cas d'une lentille cylindrique), il faut que l'axe des lentilles soit approximativement vertical, lorsque les points de couleur se succèdent horizontalement en triplet R, V, B ou autre combinaison, formant chacun des pixels d'une ligne horizontale.

Le déposant a ainsi déjà proposé d'incliner l'axe du réseau lenticulaire d'un angle $\alpha 0$ de l'ordre de 18° pour pallier les problèmes susmentionnés.

Le déposant a également proposé un procédé d'affichage d'une image auto-stéréoscopique sur un écran ayant sa plus grande direction dans le sens vertical.

En d'autres termes, à ce jour, le choix d'un écran d'affichage conditionne la manière dont cet écran va pouvoir être utilisé pour y afficher des images autostéréoscopiques. A l'inverse, les applications visées par un écran d'affichage auto-stéréoscopique conditionnent le type d'écran adapté à cette utilisation. En d'autres termes, quelle que soit la dalle de pixels utilisée et la technologie de sélection des points de vue pour l'auto-stéréoscopie, il y a un sens d'utilisation défini par l'ensemble des paramètres techniques, que ces derniers soient le fait du fabricant d'écran ou de la technique choisie pour faire de l'auto-stéréoscopie.

Les inventeurs ont donc cherché à proposer un nouveau procédé d'affichage qui permet de dépasser cette limitation d'utilisation des écrans actuels. En particulier, les inventeurs ont cherché à proposer un procédé d'affichage d'une image auto-stéréoscopique sur un écran d'affichage qui peut être pivoté autour d'un axe (réel ou virtuel) s'étendant globalement perpendiculairement au plan de l'écran de manière à pouvoir adapter l'affichage à l'orientation de l'écran de telle sorte qu'un même écran puisse être utilisé pour projeter une image auto-stéréoscopique quelle que soit l'orientation de l'écran, c'est-à-dire notamment en mode portrait ou en mode paysage ou toute orientation intermédiaire entre le mode portrait et le mode paysage.

Un tel procédé d'affichage est donc particulièrement adapté aux écrans mobiles tels que les téléphones portables ou les tablettes tactiles qui s'utilisent alternativement et selon les applications horizontalement ou verticalement, voire dans une ou plusieurs positions intermédiaires entre la position horizontale et la position verticale.

## 3. Objectifs de l'invention

L'invention vise à fournir un système et un procédé d'affichage d'une image auto-stéréoscopique à N points de vue sur un écran d'affichage mobile qui permet de conserver une projection auto-stéréoscopique de l'image, pour une pluralité d'orientations de l'écran autour d'un axe perpendiculaire à son plan d'affichage, cet axe de rotation pouvant être réel ou virtuel.

L'invention vise en particulier à fournir un système et un procédé d'affichage auto-stéréoscopique qui permet à l'utilisateur de tourner dans un sens ou dans l'autre son dispositif d'affichage et de continuer à voir les images en relief.

L'invention vise aussi à fournir, dans au moins un mode de réalisation de l'invention, un procédé et un système d'affichage d'une image auto-stéréoscopique qui permet de maintenir un effet de relief identique, pour une pluralité d'orientations de l'écran d'affichage.

L'invention vise aussi à fournir, dans au moins un mode de réalisation de l'invention, un procédé et un système d'affichage qui peut s'adapter à différents types d'écran, en particulier aux écrans de téléphones portables ou de tablettes tactiles.

## 4. Exposé de l'invention

Pour ce faire, l'invention concerne un procédé d'affichage d'une image auto-stéréoscopique selon la revendication 1.

Un procédé selon l'invention permet donc de maintenir une projection en relief d'une image auto-stéréoscopique pour une pluralité d'orientations de l'écran par rapport à sa direction initiale.

La direction initiale horizontale est considérée comme étant celle de lignes de sous pixels que l'écran soit initialement en mode paysage ou en mode portrait.

La rotation imprimée à l'écran peut consister à faire pivoter manuellement l'écran par rapport à un axe virtuel qui s'étend depuis le centre de l'écran. Cette rotation peut également consister à faire pivoter l'écran par rapport à un axe décentré, auquel cas, cette rotation est la combinaison d'une rotation centrée et d'une translation horizontale et/ou verticale.

Si l'on considère un écran équipé d'un composant optique présentant un axe principal incliné d'un angle $\alpha0$ de l'ordre de 18° par rapport à la direction des colonnes, configuré pour une observation privilégiée en mode paysage et que l'écran est pivoté d'un angle de 90° ($\alpha$ est donc égal à 90° dans cet exemple) pour basculer vers une position d'observation en mode portrait, le procédé selon l'invention permet d'afficher la même image, avec le même relief, à la fois en mode paysage et en mode portrait, au format près, qui peut se traduire, soit par un recadrage, soit par une perte d'une partie de l'image et le remplissage neutre des parties de l'écran qui ne sont plus utilisées.

Le déplacement nécessaire horizontalement pour changer de point de vue est de 6,5cm à la distance de teinte plate, de sorte que le déplacement nécessaire verticalement pour changer de point de vue est de 6,5x3 cm. Un angle de 18° environ est obtenu par un offset de 1 pixel horizontalement pour un offset de 3 pixels verticalement. En outre, les trois points de couleurs d'un pixel sont assemblés pour former approximativement un carré. En d'autres termes, les points de couleurs s'inscrivent dans trois petits rectangles juxtaposés trois fois plus haut que large pour former un carré, le pixel. Sur certains écrans, notamment de technologie OLED, les constructeurs y ont ajouté du Blanc, sans que le principe d'un pixel approximativement carré ne soit remis en cause.

Lorsque l'observateur se déplace horizontalement, il parcourt donc les différents points de vue trois fois plus vite que lorsqu'il parcourt les points de vue dans le sens vertical, conséquence du fait que le composant optique est utilisé avec un angle par rapport aux lignes et aux colonnes de l'écran.

Si le réseau lenticulaire était strictement vertical, ce phénomène n'existerait pas. L'invention consiste donc à utiliser cette particularité des composants optiques inclinés pour permettre la vision en relief suivant une orientation différente de l'orientation initiale.

Les yeux d'un observateur moyen de référence sont écartés de 6,5cm environ. Il est donc nécessaire que les points de vue se succèdent tous les 6,5cm dans le sens vertical si l'on souhaite utiliser ce sens pour afficher une image en relief. Puisque la succession des points de vue dans le sens vertical est trois fois plus lente que dans le sens horizontal, si l'on numérote les points de vue de 1 à N par ordre croissant, les couples de points de vue dans le sens horizontal sont donc choisis en 1-4 ; 2,-5 ; 3,-6 ; etc. pour pouvoir afficher dans le sens vertical les couples 1-2 ; 2-3 ; 3-4 ; etc.

A cette condition, l'observateur peut visualiser une image en relief sur l'écran orienté horizontalement, puis en le tournant de 90°, et en affichant verticalement les images élémentaires des différents points de vue suivant le même schéma de mixage que dans la position initiale, ce même observateur peut visualiser la même image verticale en relief sans aucune modification matérielle.

Dans le cas d'une image carrée, pour permettre son observation dans les deux sens successivement, il faut d'une part tourner l'ensemble des images élémentaires formant l'image auto-stéréoscopique, avant de les imbriquer avec le même algorithme de mixage que pour l'affichage horizontal, et d'autre part choisir les images trois fois plus éloignées les unes des autres dans la série d'images disponibles si l'on souhaite conserver la même sensation de relief.

En effet, en l'absence de l'invention, horizontalement, l'observateur voit naturellement les images 1 et 4, alors que verticalement, il voit les images 1 et 2, soit trois fois moins de disparité qu'horizontalement.

Un procédé selon l'invention est donc particulièrement adapté aux équipements mobiles tels que les téléphones portables et les tablettes qui sont utilisés, selon les applications, en mode portrait ou en mode paysage.

En outre, ces équipements comprennent en général des moyens de détection de l'orientation de l'équipement, tels qu'une centrale inertielle mettant en oeuvre un accéléromètre et/ou un gyroscope, qui permettent à l'utilisateur d'utiliser leur équipement dans les deux orientations sans avoir à le valider volontairement.

Il existe même des applications qui utilisent le moindre mouvement de l'écran pour modifier le contenu observé, servant ainsi d'interface de pilotage intuitif pour la manipulation et le jeu.

Un procédé selon l'invention mis en oeuvre dans un équipement mobile permet donc à l'équipement d'être utilisé à la fois en mode portrait et en mode paysage sans qu'il ne soit nécessaire de modifier matériellement l'écran.

1. Avantageusement lesdits couples de points de vue projetés vers ledit observateur dans ladite direction privilégiée dépendant d'une distance, dite base stéréoscopique, correspondant à la distance à parcourir suivant ladite direction privilégiée par l'observateur à ladite distance de teinte plate, pour passer d'un point de vue à l'autre, le procédé comprend en outre une étape de calcul d'une base stéréoscopique modifiée dépendant dudit angle $\alpha$, de pivotement détectée pour que les couples de points de vue projetés vers l'observateur par ledit composant optique dans ladite position pivotée soient identiques à ceux projetés dans ladite direction initiale, de manière à pouvoir maintenir pour l'observateur une sensation de relief identique en face de l'écran pivoté dudit angle de pivotement qu' en face de l'écran avant pivotement, à l'exception des pivotements de l'écran qui font coïncider l'axe des yeux de l'observateur avec l'axe des lentilles du réseau lenticulaire.

Le procédé comprend en outre une étape de calcul d'une base stéréoscopique modifiée qui dépend de la base stéréoscopique dans la direction privilégiée d'observation, de l'inclinaison α0 du composant optique par rapport à la verticale et de l'angle α de pivotement de l'écran par rapport à la direction initiale.

La base stéréoscopique dans la direction initiale est une caractéristique intrinsèque de l'écran d'affichage qui dépend de la dalle de pixels utilisée, du réseau lenticulaires utilisé et notamment de son pas et de sa focale.

Le calcul de cette base stéréoscopique modifiée et l'affichage des images suivant cette base stéréoscopique modifiée permet de maintenir une sensation de relief identique quelle que soit l'orientation de l'écran (à l'exception des orientations pour lesquelles aucun relief n'est possible tel qu'expliqué ultérieurement et correspondant aux pivotements de l'écran qui font coïncider l'axe des yeux de l'observateur avec l'axe des lentilles du réseau lenticulaire).

Le procédé comprend en outre une étape de détection de l'axe reliant les deux yeux d'un observateur de manière à pouvoir définir ladite direction privilégiée par rapport à la position initiale.

Cette variante permet de détecter automatiquement l'axe des yeux de l'observateur pour suivre en continu la rotation apparente de l'écran par rapport à l'axe des yeux d'un observateur privilégié. Il est alors possible d'incliner l'image observée pour que cette dernière soit constamment parallèle à l'axe des yeux ou horizontale ou orientée suivant une direction prédéterminée. Les images sont inclinées de la même façon avant de les imbriquer toujours suivant le même schéma de mixage (c'est-à-dire comme si elles étaient horizontales, qui est la position de référence initiale) et en adaptant la base stéréoscopique à l'angle de rotation détectée pour que la sensation de relief soit constante.

Ainsi, si l'écran est fixé à un volant de voiture, il est possible avec l'invention de tourner le volant, ce qui entraine le pivotement de l'écran, alors que l'image reste droite pour le conducteur et observable constamment aux modifications près du cadre utile lié au fait que l'image perçue doit s'inscrire dans une forme rectangulaire ou autre en rotation.

Dans le cadre des consoles de jeux, il est ainsi possible, de se servir de la position de l'écran et de son mouvement pour piloter le dispositif, sans perdre le relief, en modifiant en continu l'axe principal, l'affichage des images élémentaires et la base stéréoscopique pour en faire une fenêtre toujours efficace et physiologiquement correcte.

Lorsque l'axe des yeux de l'utilisateur se trouve strictement parallèle à l'axe des lentilles du réseau lenticulaire, les deux yeux voient la même image élémentaire. Aussi, la sensation de relief disparait.

En d'autres termes, il est possible de maintenir une sensation de relief quel que soit l'angle de pivotement de l'écran d'affichage, à l'exception des orientations de l'écran qui font coïncider l'axe des yeux avec l'axe des lentilles du réseau lenticulaire.

En fonction de l'angle du réseau lenticulaire et du schéma de mixage des images élémentaires, il existe des orientations pour lesquelles les deux yeux voient le même point de vue. Par exemple, et comme détaillé dans la description détaillée qui suit, pour un réseau lenticulaire incliné à 18°, la sensation de relief disparait pour les angles de pivotement, par rapport à la génératrice du réseau lenticulaire, compris entre 90° et 127° et entre 270° et 307°. Pour tous les autres angles de pivotement, l'invention permet de maintenir une sensation de relief.

Un procédé permet l'affichage de tous types d'images autostéréoscopiques, quels que soient le nombre de points de vue qui forment l'image auto-stéréoscopique. L'invention peut par exemple permettre l'affichage d'images constituées de 8 points de vue (N=8).

Selon une variante avantageuse le procédé permet également l'affichage d'une image auto-stéréoscopique à 2 points de vue (N=2).

Pour ce faire, ladite étape de détection de l'angle α de pivotement du dudit écran d'affichage entre ladite position initiale et ladite position pivotée comprend une étape de détection, à chaque instant, de l'axe reliant les deux yeux d'un observateur de manière à pouvoir définir l'angle entre ladite direction initiale et l'axe reliant les deux yeux de l'observateur, cet angle formant l'angle α de pivotement.

Le procédé selon cette variante permet donc de détecter la position des yeux de l'observateur et donc d'adapter l'affichage en fonction de l'angle détecté entre l'axe séparant les yeux de l'observateur et la direction initiale de l'écran d'affichage. Il est donc possible, quel que soit l'angle détecté, d'afficher les images de sorte que les deux points de vue soient adressés respectivement à l'oeil droit et à l'œil gauche de l'observateur.

Avantageusement ledit schéma de mixage prédéterminé consiste à décaler d'une ligne à l'autre de la matrice de pixels chaque point de vue d'un sous pixel de couleur différente par rapport à sa position sur la ligne précédente et l'angle α0 est choisi de l'ordre de 18° par rapport à la direction privilégiée.

Selon cette variante, ledit angle α0 est de l'ordre de 18°. Cette variante avantageuse est particulièrement dédiée aux écrans dont la direction privilégiée est la direction horizontale. En effet, comme indiqué précédemment, puisque la succession des points de vue dans le sens vertical est trois fois plus lente que dans le sens horizontal, si la série des points de vue est numérotée de 1 à N par ordre croissant, les couples de points de vue dans le sens horizontal sont donc choisis en 1-4 ; 2,-5 ; 3,-6 ; etc. pour pouvoir afficher dans le sens vertical les couples 1-2 ; 2-3 ; 3-4 ; etc.

Cela étant, selon d'autres variantes, le composant optique peut présenter une autre inclinaison par rapport à la direction des colonnes sans que cela ne change l'invention. Une inclinaison autre que 18° modifie simplement la répartition des points de vue et l'adaptation de l'affichage en fonction de l'angle de pivotement α détecté.

Ainsi, selon une autre variante ledit schéma de mixage prédéterminé consiste à décaler d'une ligne à l'autre de la matrice de pixels chaque point de vue de deux sous-pixels de couleurs différentes par rapport à sa position sur la ligne précédente et l'angle $\alpha 0$ est choisi de l'ordre de 33° par rapport à la direction initiale.

Un angle $\alpha 0$ de l'ordre de 33° correspond à un offset de 2 pixels horizontalement pour un offset de 3 pixels verticalement. Aussi, si l'on imbrique les images élémentaires formant l'image auto-stéréoscopique de sorte que les points de vue sont décalés de deux sous-pixels à chaque changement de ligne (chaque sous-pixel étant trois fois plus haut que large), la succession des points de vue dans le sens vertical est alors une fois et demi plus lente que dans le sens horizontal. Aussi, si la série des points de vue est numérotée de 1 à N par ordre croissant, les couples de points de vue dans le sens horizontal peuvent être choisis en 1-4 ; 2,-5 ; 3,-6 ; etc. pour pouvoir afficher dans le sens vertical les couples 1-3 ; 2-4 ; 3-5 ; etc. et conserver ainsi une sensation de relief très proche dans le sens vertical et dans le sens horizontal.

L'invention concerne également un système d'affichage d'une image auto-stéréoscopique selon la revendication 7.

Un système d'affichage selon l'invention met avantageusement en oeuvre un procédé d'affichage selon l'invention et un procédé d'affichage selon l'invention est avantageusement mis en oeuvre par un système d'affichage selon l'invention.

Aussi, les avantages et effets du procédé d'affichage selon l'invention s'appliquent au système d'affichage selon l'invention.

Dans tout le texte, on entend par module, un élément logiciel, un sous-ensemble d'un programme logiciel, pouvant être compilé séparément, soit pour une utilisation indépendante, soit pour être assemblé avec d'autres modules d'un programme, ou un élément matériel, ou une combinaison d'un élément matériel et d'un sous-programme logiciel. De préférence, les modules du système selon l'invention sont des sous-ensembles d'un programme logiciel destiné à être exécuté par un microprocesseur associé à l'écran d'affichage.

Avantageusement le système comprend en outre des moyens de détection de l'axe reliant les deux yeux d'un observateur de manière à pouvoir définir ladite direction initiale par rapport à cet axe formant la nouvelle direction privilégiée.

Ces moyens de détection peuvent être de tous types. Il peut par exemple s'agir d'un dispositif connu sous la terminologie anglaise de dispositif de « tracking » qui permet de détecter la position des yeux de l'observateur et d'en déduire l'axe reliant les deux yeux détectés.

Avantageusement lesdits moyens de détection d'un angle $\alpha$ de pivotement dudit écran d'affichage entre ladite position initiale et une position pivotée comprennent une centrale inertielle solidaire dudit écran d'affichage.

Une telle centrale comprend par exemple un ou plusieurs accéléromètres et un ou plusieurs gyroscopes configurés pour pouvoir détecter la position dans l'espace de l'écran d'affichage solidaire de la centrale.

Avantageusement ledit écran d'affichage est un écran à 8 points de vue.

Un tel écran est de préférence un écran d'affichage d'une tablette tactile ou d'un smartphone.

L'invention concerne également un procédé d'affichage et un système d'affichage caractérisés en combinaison par tout ou partie des caractéristiques mentionnées ci-dessus ou ci-après.

## 5. Liste des figures

D'autres buts, caractéristiques et avantages de l'invention apparaîtront à la lecture de la description suivante donnée à titre uniquement non limitatif et qui se réfère aux figures annexées dans lesquelles :

- la figure 1 est une vue schématique d'un système d'affichage selon un mode de réalisation de l'invention,
- la figure 2 est une vue schématique d'un procédé selon un mode de réalisation de l'invention mis en oeuvre par un système selon l'invention,
- les figures 3a, 3b et 3c sont des vues schématiques des points de vue adressés à chacun des yeux d'un observateur situé à la distance de teinte plate par un procédé selon l'invention en fonction de l'orientation de l'écran,
- la figure 4 est une vue schématique d'un écran d'affichage en position horizontale sur laquelle les bases stéréoscopiques en X et en Y sont représentées,
- la figure 5 est une vue schématique d'un système d'affichage selon un autre mode de réalisation de l'invention,
- la figure 6 est une vue schématique d'une portion de la matrice de pixels d'un écran d'affichage d'un système d'affichage selon un mode de réalisation de l'invention mettant en oeuvre un procédé selon un mode de réalisation de l'invention,
- les figures 7a, 7b, 7c sont des vues schématiques respectivement de la matrice de pixels de l'écran de la figure 6, de l'image affichée par un point de vue par cet écran et de l'image perçue par un oeil d'un observateur pour une orientation paysage de l'écran,
- les figures 8a, 8b, 8c sont des vues schématiques respectivement de la matrice de pixels de l'écran de la figure 6, de l'image affichée par un point de vue par cet écran et de l'image perçue par un oeil d'un observateur pour une orientation inclinée d'un angle de l'ordre de 45° par rapport à la position paysage de l'écran,
- les figures 9a, 9b, 9c sont des vues schématiques respectivement de la matrice de pixels de l'écran de la figure 6, de l'image affichée par un point de vue par cet écran et de l'image perçue par un oeil d'un observateur pour une orientation portrait de l'écran.

**6. Description détaillée d'un mode de réalisation de l'invention**

Sur les figures, les échelles et les proportions ne sont pas strictement respectées et ce, à des fins d'illustration et de clarté.

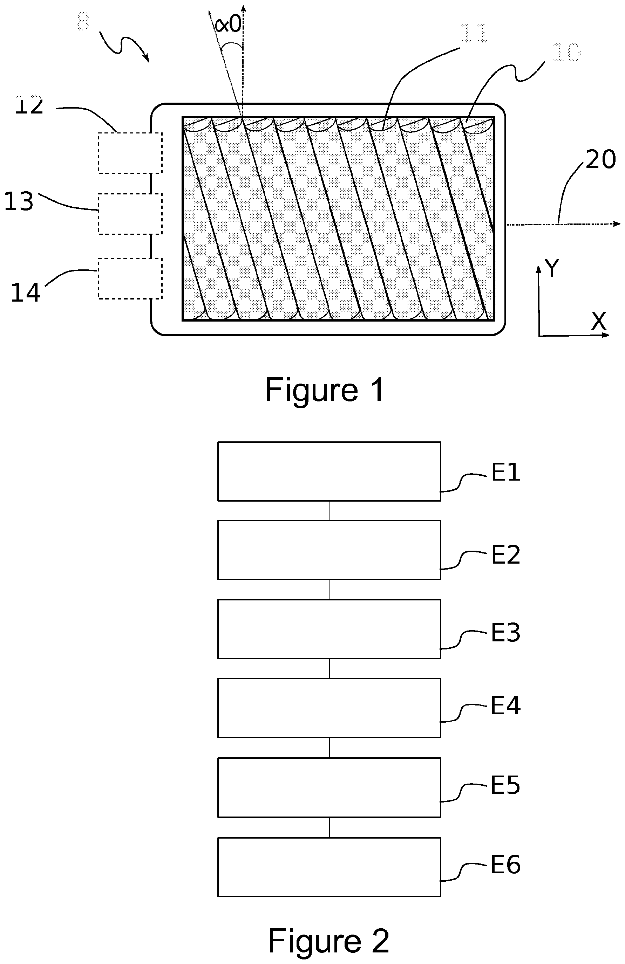

La figure 1 illustre schématiquement un système d'affichage 8 d'une image autostéréoscopique à huit points de vue comprenant un écran d'affichage d'une tablette tactile. Cet écran comprend une matrice 10 de pixels agencés par lignes et par colonnes surmonté d'un réseau 11 de lenticules cylindriques d'axe principal incliné d'un angle $\alpha 0$ par rapport à la direction des colonnes. Cet angle $\alpha 0$ est par exemple de 18°.

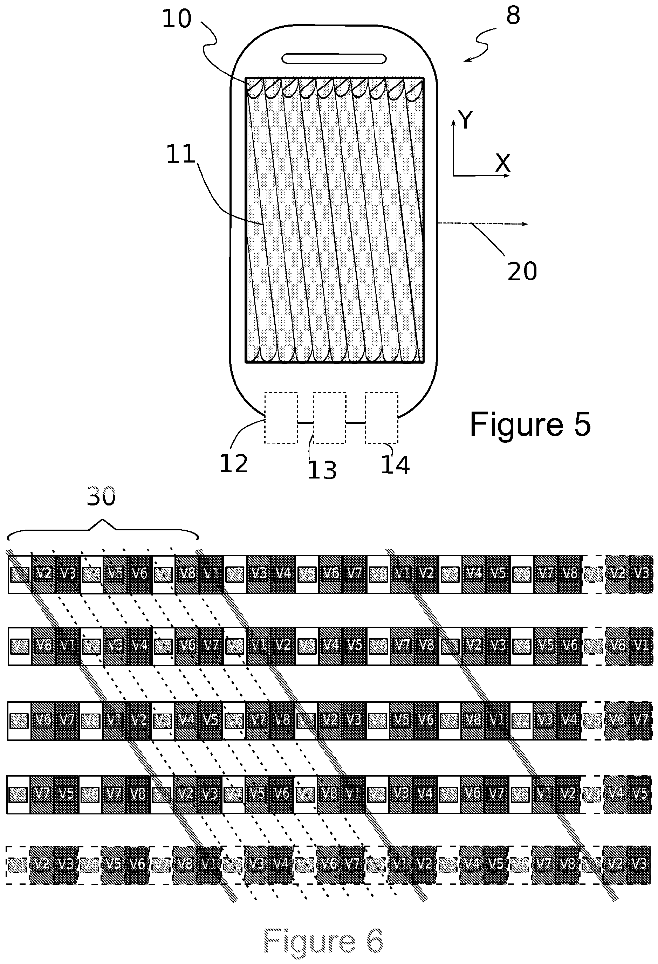

Bien entendu, le système d'affichage peut être un téléphone mobile portable du type « ordi phone », plus connu sous la dénomination anglaise de *smart-phone* ou tout système d'affichage équivalent. La figure 5 illustre de manière schématique un *smart-phone*.

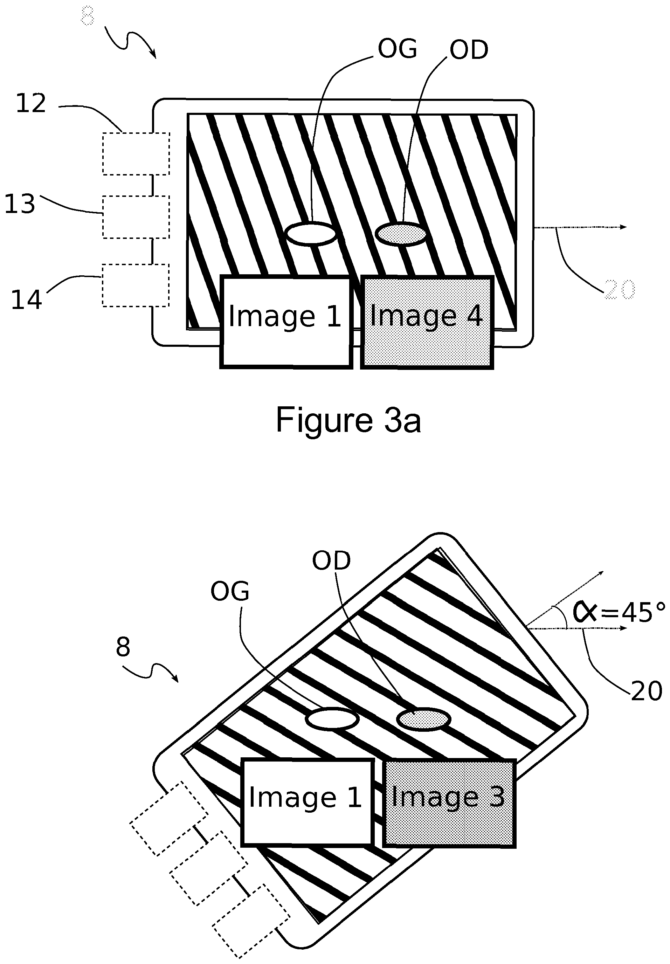

L'ensemble formé de l'écran et du réseau 11 de lenticules cylindriques est configuré pour permettre, lorsque l'écran est orienté selon une direction initiale d'observation 20, qui est la direction horizontale dans le cas illustré par les figures 1 et 5, la projection de couples prédéterminés de points de vue respectivement vers l'œil droit OD et l'oeil gauche OG d'un observateur situé à une distance nominale de l'écran, dite distance de teinte plate. Les points de vue sont numérotés de 1 à 8 par ordre croissant et le système est configuré pour que les couples de points de vue prédéterminés adressés à l'observateur dans le sens horizontal (qui est la direction initiale d'observation 20 selon le mode de réalisation des figures) soient, par exemple, les couples 1-4 ; 2-5 ; 3-6 ; 4-7 ; 5-8. Bien entendu, d'autres configurations sont possibles et l'homme du métier déterminera sans difficulté comment adapter la description qui suit à une autre configuration de départ. La Figure 3a illustre la projection du couple 1-4 à titre d'exemple. Autrement dit, les yeux OG et OD de l'observateur situé à la distance de teinte plate du système 8 perçoivent respectivement les images 1 et 4, formant les points de vue 1 et 4 parmi les 8 points de vue de l'image auto-stéréoscopique. Cette projection est liée à la configuration du système. Il est bien sûr possible de prévoir une autre configuration de base selon les besoins et les applications.

L'écran est mobile en rotation au moins autour d'un axe réel ou virtuel qui s'étend perpendiculairement à l'écran. En d'autres termes, l'écran peut pivoter dans le plan X, Y représenté schématiquement sur la figure 1. Cet écran est donc adapté pour mettre en oeuvre l'étape E1 de pivotement de l'écran d'affichage d'une position initiale correspondant à ladite direction privilégiée d'observation vers une position, dite position pivotée. Le pivotement de l'écran autour d'un axe perpendiculaire à l'écran est par exemple le résultat d'une action manuelle d'un utilisateur.

Le système comprend également une centrale inertielle 12 formant des moyens de détection d'un angle $\alpha$ de pivotement de l'écran. La plupart des tablettes actuelles disposent en interne d'une telle centrale inertielle qui permet de déterminer la position de l'écran par rapport à une position de base. Cette centrale inertielle 12 met en oeuvre l'étape E2 de détection de l'angle $\alpha$ de pivotement de l'écran du procédé selon l'invention illustré sur la figure 2.

Le système comprend également un module de rotation des images élémentaires d'un angle inverse à l'angle $\alpha$, soit-$\alpha$ de pivotement détecté. Un tel module est par exemple un logiciel hébergé par le système d'affichage 8, et configuré pour pouvoir être exécuté par un processeur du système d'affichage (tablette tactile ou smart-phone par exemple).

La rotation des images est inverse à la rotation de l'écran de telle manière que l'observateur puisse observer une image droite, c'est-à-dire une image qui s'étend le long de la direction privilégiée d'observation, lorsque l'écran est pivoté. En d'autres termes, l'écran pivote, mais l'image perçue reste orientée selon la direction privilégiée d'observation du fait de cette rotation inverse des images. Ce module de rotation met en oeuvre l'étape E3 du procédé selon l'invention illustré sur la figure 2.

Le système comprend également un module d'imbrications des images élémentaires suivant le schéma de mixage de l'image auto-stéréoscopique utilisé dans la direction initiale d'observation. En d'autres termes, les images élémentaires sont imbriquées avec le même mixage qu'avant la rotation de l'écran. Un tel module est par exemple un logiciel hébergé par le système d'affichage 8 et configuré pour pouvoir être exécuté par un processeur du système d'affichage (tablette tactile ou smart-phone par exemple).

Ce module de mixage des images met en oeuvre l'étape E4 du procédé selon l'invention illustré sur la figure 2.

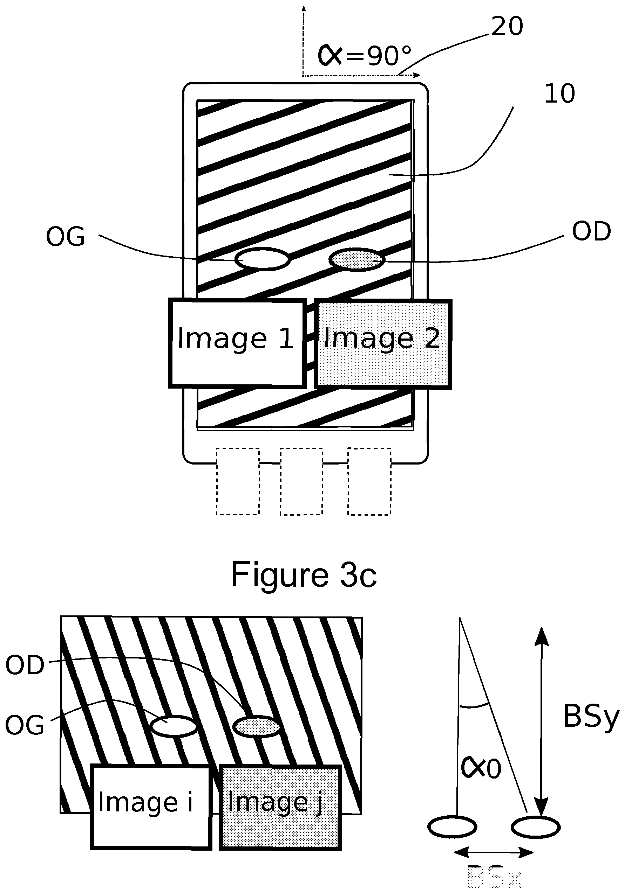

Le système comprend également, selon un mode préférentiel de réalisation, un module 13 de calcul d'une base stéréoscopique modifiée qui dépend de l'angle $\alpha$ de pivotement détecté pour pouvoir projeter vers l'observateur les points de vue de l'image auto-stéréoscopique identiques à ceux projetés dans la direction horizontale initiale. Ce module met donc en oeuvre l'étape E6 de calcul d'une base stéréoscopique modifiée dépendant de cet angle $\alpha$ de pivotement détecté de sorte que les couples de points de vue projetés vers l'observateur par ledit composant optique dans cette position pivotée soient identiques à ceux projetés dans ladite direction initiale. Cette étape est décrite ci-après en détail en lien avec les figures 3a, 3b, 3c et 4. Ce module 13 de calcul est par exemple un logiciel hébergé par le système d'affichage 8 et configuré pour pouvoir être exécuté par un processeur du système d'affichage.

Enfin, le système comprend un module d'affichage 14 des points de vue suivant la base stéréoscopique modifiée de sorte que la sensation de relief pour l'observateur en face de l'écran 10 pivoté de l'angle $\alpha$ soit identique à celle de ressentie selon la direction initiale d'observation. Ce module 14 d'affichage est par exemple un logiciel hébergé par le système d'affichage 8 (tablette ou smart-phone par exemple) et configuré pour pouvoir être exécuté par un processeur du système.

Ce module met donc en oeuvre l'étape E5 d'affichage des N points de vue de l'image suivant ladite base stéréoscopique modifiée (dans le cas où la base est effectivement modifiée compte tenu du relief visé pour l'observateur dans la position pivotée) de sorte que la sensation de relief pour l'observateur en face de l'écran pivoté dudit angle de rotation détecté puisse être identique à celle ressentie selon ladite direction initiale d'observation. Cette étape est décrite ci-après en détail en lien avec les figures 3a, 3b, 3c et 4.

Comme indiqué précédemment, le terme module désigne un élément logiciel, un sous- ensemble d'un programme logiciel, pouvant être compilé séparément, soit pour une utilisation indépendante, soit pour être assemblé avec d'autres modules d'un programme, ou un élément matériel, ou une combinaison d'un élément matériel et d'un sous-programme logiciel. Un tel élément matériel peut comprendre un circuit intégré propre à une application (plus connu sous l'acronyme ASIC pour la dénomination anglaise *Application-Specific Integrated Circuit*) ou un circuit logique programmable (plus connu sous l'acronyme FPGA pour la dénomination anglaise *Field-Programmable Gate Array*) ou un circuit de microprocesseurs spécialisés (plus connu sous l'acronyme DSP pour la dénomination anglaise *Digital Signal Processor*) ou tout matériel équivalent. D'une manière générale, un module est donc un élément (logiciel et/ou matériel) qui permet d'assurer une fonction.

Les étapes de calcul d'une base stéréoscopique modifiée, fonction de l'angle $\alpha$ de pivotement, et d'affichage des points de vue de l'image suivant cette base stéréoscopique modifiée sont décrites ci-après en lien avec les figures 3a, 3b, 3c et 4.

On considère un repère lié à l'écran dont l'origine est par exemple le centre de l'écran, l'axe horizontal est désigné par X, l'axe vertical est désigné par Y et l'axe normal à l'écran est désigné par Z. L'image auto-stéréoscopique est une image à N points de vue, avec N=8, et les points de vue sont numérotés de 1 à N par ordre croissant.

Sur la figure 4, BSx désigne la base stéréoscopique du système en X, c'est-à-dire la distance à parcourir horizontalement pour changer de point de vue par un observateur situé à la distance de teinte plate, désignée ci-après par Dtp. Autrement dit, à la position (0, 0, Dtp), l'observateur voit avec un oeil (le gauche par exemple) le point de vue *i* et voit avec ce même oeil le point de vue *i*+1 à la position (BSx, 0, Dtp).

BSy désigne la base stéréoscopique du système en Y, c'est-à-dire la distance à parcourir verticalement pour changer de point de vue par un observateur situé à la distance de teinte plate Dtp. Autrement dit, à la position (0, 0, Dtp), l'observateur voit avec un oeil (le gauche par exemple) le point de vue *j* et voit avec ce même oeil le point de vue *j*+1 à la position (0, BSy, Dtp).

Le réseau de lenticules cylindriques étant incliné d'un angle $\alpha0$ par rapport à la verticale, BSx et BSy sont liés par la relation suivante :

$$BSx = \tan(\alpha0) * BSy$$

Si l'on désigne par OG, la position de l'œil gauche de l'observateur et par OD, la position de l'oeil droit de l'observateur, le déphasage D entre les deux yeux de l'observateur, c'est-à-dire l'écart en nombre de points de vue entre l'oeil gauche et l'oeil droit est déterminé par la relation suivante :

$$D = Dx/BSx + Dy/BSy$$

où Dx et Dy représentent la projection du vecteur OD-OG de l'observateur respectivement sur l'axe horizontal et sur l'axe vertical.

Lorsque l'écran d'affichage pivote d'un angle $\alpha$ par rapport à la direction initiale d'observation, qui est la direction horizontale dans le cas présent, cet angle $\alpha$ est l'angle que fait l'axe séparant les deux yeux OD et OG de l'observateur par rapport à la direction initiale.

Si on désigne par DIY, la distance entre les deux yeux de l'observateur, qui est en moyenne de 6,5cm, Dx et Dy sont déterminés par les relations suivantes :

$$Dx = \cos(\alpha) * DIY$$

$$Dy = \sin(\alpha) * DIY$$

On peut donc déterminer le déphasage entre les deux yeux par l'équation suivante :

$$D = DIY/BSy * (\cos(\alpha)/\tan(\alpha) + \sin(\alpha))$$

Il est donc possible de calculer le déphasage entre les deux yeux de l'observateur, c'est-à-dire quels points de vue sont adressés à chaque oeil de l'observateur en fonction de la position de l'écran par rapport à la direction initiale.

Il est donc possible de modifier la base stéréoscopique à partir de cette valeur du déphasage calculé.

Il est également possible de déterminer les orientations pour lesquelles les deux yeux voient le même point de vue.

Le tableau ci-après indique les deux premiers points de vue visibles par l'observateur pour une configuration de réseau incliné à 18°. Les angles alphas indiqués sont ceux pour lesquels un changement de couples projetés intervient.

| α | D | Deux premiers couples projetés |
|---|---|---|
| 0 | 3 | 1-4 / 2-5 |
| 69 | 2 | 1-3 / 2-4 |
| 90 | 1 | 1-2 / 2-3 |
| 127 | -1 | 8-7 / 7-6 |
| 148 | -2 | 8-6 / 7-5 |
| 180 | -3 | 8-5 / 7-4 |
| 249 | -2 | 8-6 / 7-5 |
| 270 | -1 | 8-7 / 7-6 |
| 307 | 1 | 1-2/2-3 |
| 324 | 2 | 1-3/2-4 |

On constate qu'aucun relief n'est possible pour les orientations pour lesquelles D est en valeur absolue inférieur à 1. Autrement dit, aucun relief n'est possible pour un angle de pivotement compris entre 90° et 127° et entre 270° et 307°.

Le tableau ci-après indique les deux premiers points de vue visibles par l'observateur pour une configuration de réseau incliné à 33°. Les angles alphas indiqués sont ceux pour lesquels un changement de couples projetés intervient.

| α | D | Deux premiers couples projetés |
|---|---|---|
| 0 | 3 | 1-4 / 2-5 |
| 90 | 2 | 1-3 / 2-4 |
| 108 | 1 | 1-2 / 2-3 |
| 140 | -1 | 8-7 / 7-6 |
| 157 | -2 | 8-6 / 7-5 |
| 180 | -3 | 8-5 / 7-4 |
| 270 | -2 | 8-6 / 7-5 |
| 288 | -1 | 8-7 / 7-6 |
| 320 | 1 | 1-2 / 2-3 |
| 336 | 2 | 1-3 / 2-4 |

On constate que dans cette configuration, aucun relief n'est possible pour un angle de pivotement compris entre 108° et 140° et entre 288° et 320°.

On constate donc que dans cette configuration, lorsque l'écran est pivoté à 90°, c'est-à-dire par exemple qu'il est basculé d'une position paysage à une position portrait, il est encore possible de pivoter l'écran de 18° avant de perdre le relief alors que dans la configuration précédente, la position défavorable peut intervenir rapidement après le basculement en mode portrait. Cela offre une souplesse supplémentaire d'utilisation d'un écran suivant cette configuration.

La figure 3a illustre l'écran d'affichage orienté selon la direction horizontale initiale d'observation. Le système est configuré pour qu'à la distance de teinte plate, les vues 1 et 4 soient adressées respectivement à l'oeil gauche et à l'oeil droit de l'observateur. Sur cette figure, les lignes inclinées représentent schématiquement le réseau lenticulaire incliné d'un angle α0 (qui est de préférence fixé à 18° ou 33° comme expliqué précédemment).

La figure 3b illustre l'écran d'affichage pivoté d'un angle α par rapport à la direction initiale, qui correspond dans cet exemple à 45°. Le déphasage entre les deux yeux dans cette position est calculé suivant la formule précédente et permet de déterminer que l'écart entre les deux yeux est de trois vues (pour un angle à 18°). Aussi, dans cette orientation, les vues 1 et 3, ou 2 et 4, etc. sont adressées respectivement à l'œil gauche et à l'œil droit de l'observateur. Il est donc possible pour le module d'affichage, soit de substituer à la vue 4 l'image de la vue 5 pour que la sensation de relief soit identique à celle ressentie à la position initiale de l'écran, c'est-à-dire la position de la figure 1, soit d'afficher le point de vue 1, à la place du point de vue 2 auquel cas la sensation de relief est identique à celle ressentie à la position initiale de l'écran, mais avec un léger décalage de l'axe de la scène observée par rapport à l'autre correction possible.

La figure 3c illustre l'écran d'affichage pivoté d'un angle de 90° par rapport à la direction horizontale initiale. En d'autres termes, l'écran présente une orientation verticale. Dans cette position, les points de vue 1 et 2, 2 et 3, 3 et 4 etc. sont adressés respectivement à l'oeil gauche et à l'oeil droit de l'observateur. Il est donc possible pour le module d'affichage soit de substituer à la vue 4 l'image de la vue 6 pour que la sensation de relief soit identique à celle ressentie à la position initiale de l'écran, c'est-à-dire la position de la figure 1, soit d'afficher le point de vue 1 à la place du point de vue 3 auquel cas la sensation de relief est identique à celle ressentie à la position initiale de l'écran, avec un léger décalage de l'axe de la scène observée par rapport à l'autre correction possible.

Il est donc possible, lors de l'étape d'affichage des N points de vue sur l'écran pivoté, de choisir soit les images de la série des N points qui sont définies par le calcul du déphasage entre les deux yeux dans cette orientation, soit de définir une base stéréoscopique modifiée qui permet de conserver la même sensation de relief lors de la rotation. Pour ce faire, il suffit de permuter les points de vue dans la position pivotée pour que les images adressées à chaque oeil de l'observateur correspondent au même couple de points de vue que dans la position initiale. Il est également possible de maintenir une sensation de relief en subissant un changement de profondeur en fonction des orientations de l'écran.

L'homme du métier comprend que le phénomène décrit est identique si ce n'est plus l'écran qui pivote de la position d'observation initiale vers la position pivotée, mais que c'est la tête de l'observateur (ou plus précisément, l'axe qui relie les deux yeux de l'observateur) qui pivote devant l'écran. En d'autres termes, dans ce cas, on peut considérer que l'écran pivote d'un angle -$\alpha$ par rapport à l'axe des yeux de l'observateur.

L'écran d'affichage est configuré pour afficher P points de vue, dits points de vue de l'écran, P étant supérieur ou égal à 3, alors que l'image affichée est une image auto-stéréoscopique à 2 points de vue uniquement, autrement dit, N est égal à 2.

Il est alors possible de déterminer, à partir de la détection de la position des yeux de l'observateur (qui est par exemple obtenue par un dispositif de tracking adhoc porté par le dispositif d'affichage), les sous-pixels de l'écran qui forment des bandes visibles par chaque oeil et qui correspondent donc à 1/P $^{ème}$ de l'écran total, ainsi que les sous-pixels de l'écran qui forment des bandes de l'écran non visibles par aucun des deux yeux de l'observateur à la position détectée et qui correspondent donc à P-2/P $^{ème}$ de l'écran total.

Au cours de l'étape d'affichage, il est alors possible d'attribuer aux sous-pixels de chaque bande visible de l'écran, pour chaque oeil de l'observateur à ladite position détectée, les sous-pixels du point de vue correspondant à cet oeil, et d'attribuer aux sous-pixels des bandes non visibles de l'écran par aucun des deux yeux de l'observateur, des sous-pixels correspondant à des points de vue, dits points de vue de sécurité, construits à partir des sous-pixels des deux points de vue de l'image à afficher.

En d'autres termes, cette variante avantageuse permet d'afficher une image auto-stéréoscopique qui n'est constituée que de deux images élémentaires pour former uniquement deux points de vue (respectivement pour l'œil droit et l'oeil gauche de l'observateur) sur un écran configuré pour afficher au moins 3 points de vues (désigné ci-après écran multipoints de vue). En d'autres termes, cette variante prévoit de détourner l'utilisation d'un écran multipoints de vue (c'est à dire configuré pour afficher au moins 3 points de vue) présentant une configuration prédéterminée connue (notamment la distance de teinte plate physique de l'écran) et de n'y afficher que deux points de vue de manière à pouvoir utiliser les pixels initialement dédiés aux points de vue de l'écran non utilisés, pour y afficher des points de vue de sécurité construits à partir des deux points de vue de l'image. Ces points de vue de sécurité permettent de supprimer les passages de lobe notamment et d'améliorer la qualité d'observation en cas de déplacement de l'observateur par rapport à l'écran.

Les portions de l'écran visibles selon la position de l'observateur changent non seulement en cas de déplacement de l'observateur parallèlement à l'écran, mais également en cas de déplacement relatif de l'observateur perpendiculairement à l'écran.

Cette variante avantageuse permet donc de tenir compte de tous les mouvements de l'écran (non seulement son pivotement autour d'un axe normal à l'écran, mais également un déplacement relatif de l'utilisateur par rapport à l'écran) pour adapter en permanence l'affichage sur l'écran.

Les points de vue de sécurité peuvent être formés par une recopie d'un des points de vue de l'image, c'est à dire du point de vue dédié à l'oeil droit ou du point de vue dédié à l'oeil gauche. Par exemple, à la teinte plate et dans le cas d'un écran multipoints de vue configuré pour afficher 8 points de vue, une fois les deux points de vue de l'image attribués à deux points de vue de l'écran qui dépendent de la position de l'observateur, le procédé peut prévoir que les 6 points de vue de sécurité restants affichent 3 fois le point de vue de l'image dédiée à l'oeil droit et trois fois le point de vue de l'image dédiée à l'oeil gauche.

La figure 6 illustre schématiquement une portion d'un écran d'affichage d'un système selon un mode de réalisation de l'invention.

Chaque sous-pixel de l'image est associé à un point de vue de l'image. Ainsi, sous la lentille 30 de la figure 6, les points de vue V1, V2, V3, V4, V5, V6, V7 et V8 sont attribués à chaque sous-pixel. La lentille 30 et les suivantes sont inclinées d'un angle $\alpha0$, qui est par exemple de 33°. Comme on l'observe sur la figure 6, le mixage des images élémentaires consiste en un décalage de deux sous-pixels à chaque changement de ligne.

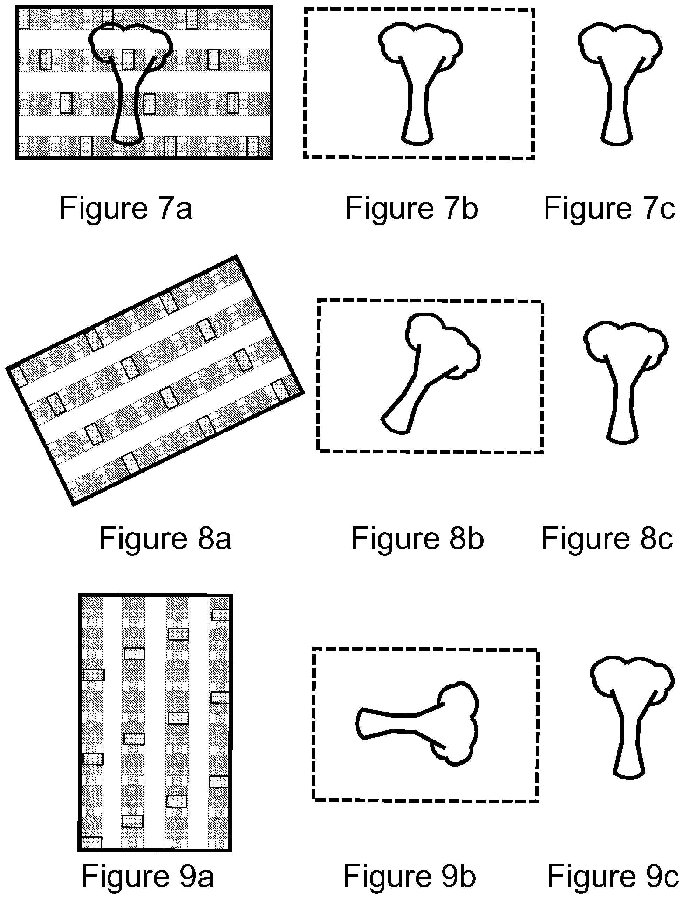

Dans toute la suite, on ne considère que le point de vue V1 représenté schématiquement par un arbre sur les figures 7a à 9c, étant entendu que le principe décrit s'applique *mutatis mutandis* aux autres points de vue.

La figure 7a est une vue de la matrice de pixels d'un écran d'affichage orienté selon la direction initiale d'observation, qui est la direction horizontale dans cet exemple. Chaque sous-pixel de la matrice associée à la vue 1 comprend une information de l'arbre représenté. En d'autres termes, les différents sous-pixels de la vue V1 mis en évidence sur la figure 7a permettent de former ensemble une image de l'arbre représenté. La figure 7b est une vue schématique de l'image effectivement affichée par la matrice de pixels et la figure 7c est une illustration de l'image perçue par un observateur. Bien entendu, en pratique, chaque oeil de l'observateur voit une image d'une vue différente (par exemple la vue V1 avec l'œil gauche et la vue V4 avec l'œil droit) de sorte qu'une image en relief est perceptible par l'observateur.

La figure 8a est une vue de la matrice de pixels de l'écran d'affichage pivoté d'un angle $\alpha$, de l'ordre de 45°, par rapport à la direction horizontale. Conformément à l'invention, l'image élémentaire correspondante à la vue V1 (et toutes les autres images élémentaires) est pivotée d'un angle inverse à l'angle $\alpha$ soit -$.\alpha$ L'image affichée par l'écran est ainsi représentée par la figure 8b. Cette image est inclinée d'un angle inverse à l'inclinaison de l'écran représentée sur la figure 8a. Les différentes images sont ensuite imbriquées selon le même schéma de mixage que dans la direction horizontale. La figure 8c illustre la perception de l'image par l'observateur, qui n'a pas changé, pour la vue V1, par rapport à la position horizontale, en dépit de l'inclinaison de l'écran. La perception de relief peut, en revanche, changer entre la position horizontale et la position inclinée, en fonction du point de vue qui est adressé à l'autre oeil de l'observateur, comme expliqué précédemment.

La figure 9a est une vue de la matrice de pixels de l'écran d'affichage pivoté d'un angle de 90° par rapport à la direction horizontale. Conformément à l'invention, l'image élémentaire correspondante à la vue V1 (et toutes les autres images élémentaires) est pivotée d'un angle inverse. L'image affichée par l'écran est ainsi représentée par la figure 9b. Les différentes images sont ensuite imbriquées selon le même schéma de mixage que dans la direction horizontale. La figure 9c illustre la perception de l'image par l'observateur, qui n'a pas changé, pour la vue V1, par rapport à la position horizontale, en dépit de l'orientation verticale de l'écran.

Un système d'affichage peut être associé à un dispositif de projection aérienne et dématérialisée d'une image auto-stéréoscopique proposé par le demandeur dans la demande de brevet internationale PCT/FR2018/050563 et commercialisé sous la dénomination Exobox®.

En effet, le dispositif optique Exobox® permet de transporter optiquement une image auto-stéréoscopique pour en fournir une image flottante et dématérialisée de l'image. Pour ce faire, le dispositif optique est composé successivement, à partir d'un écran d'affichage auto-stéréoscopique, de lentilles convergentes couvrant la totalité de la surface de l'écran, suivi d'un miroir concave de même focale que les lentilles convergentes, placé au double de sa focale par rapport à l'écran, et d'un miroir semi-transparent agencé entre les lentilles convergentes et le miroir sphérique concave et formant un angle de 45° par rapport au plan de l'écran et destiné à réfléchir à 90° une partie des rayons lumineux au retour du miroir sphérique concave. L'image de retour se forme au niveau de l'écran, de même taille et en sens inversé. La partie de cette image en retour déviée par le miroir plan placé à 45° se regarde au travers d'une fenêtre pratiquée en face avant du dispositif. Ainsi, l'image de l'écran semble flotter en face de l'observateur à travers cette fenêtre de visualisation. Cette image s'affiche à l'échelle 1 en étant dématérialisée et perpendiculaire au plan de l'écran.

Si l'on pivote l'écran, placé horizontalement en partie basse du dispositif, d'un angle de 90°, sa réplique aérienne est verticale en haut du dispositif et légèrement en dehors de la fenêtre.

Aussi, si l'écran est un écran selon l'invention permettant une observation dans les deux sens d'observation, c'est-à-dire en mode portrait ou en mode paysage, alors une simple rotation horizontale du plan portant l'écran se traduit par une rotation verticale de l'image aérienne passant du format horizontal au format vertical et réciproquement en fonction du contenu à afficher.

Un tel dispositif Exobox® équipé d'un système d'affichage selon l'invention permet donc de faire flotter une image auto-stéréoscopique dont l'orientation peut changer en faisant simplement pivoter l'écran dans l'Exobox® et tout en maintenant la sensation de relief pour l'observateur.

Un tel ensemble peut par exemple être placé dans un véhicule automobile, l'écran d'affichage étant formé par un téléphone portable auto-stéréoscopique positionné sur le plan inférieur. Ainsi, il est possible de présenter l'image relief issue du téléphone au conducteur. Cette image dématérialisée peut être associée à un système de commande vocale ou tout composant simulant une interaction tactile de sorte que le conducteur peut piloter le téléphone dans un sens ou dans l'autre sans modifier l'encombrement et sans avoir à le manipuler.

En complément, l'ajout d'un diaphragme à la distance focale du miroir concave améliore la qualité de l'image et notamment son contraste en supprimant une partie des rayons réfléchis qui reforment une image inversée au plan de l'écran. Pour ce faire le diaphragme est avantageusement décentré, sans dépasser le centre de symétrie verticale du dispositif.

**Revendications**

1. Procédé d'affichage d'une image auto-stéréoscopique comprenant une série de N points de vue numérotés successivement de 1 à N et formés de N images élémentaires imbriquées selon un schéma de mixage prédéterminé, sur un écran d'affichage mobile en rotation autour d'un axe virtuel ou réel s'étendant perpendiculairement au plan d'affichage de l'écran, ledit écran comprenant une matrice de pixels agencés par lignes et par colonnes, chaque pixel étant composé d'une pluralité de sous-pixels de couleurs différentes affectés chacun à un point de vue de l'image, ledit écran étant en outre surmonté d'un composant optique (11), du type réseau de lenticules cylindriques ou barrière de parallaxe, d'axe principal incliné d'un angle $\alpha 0$ non nul par rapport à la direction des colonnes, et configuré pour permettre, lorsque ledit écran est orienté selon une direction privilégiée d'observation (20), la projection de couples prédéterminés de points de vue différents formés de deux points de vue séparés l'un de l'autre, dans la série des N points de vue, d'au moins un point de vue, respectivement à l'œil gauche et l'œil droit d'un observateur, situé à une distance nominale de l'écran, dite distance de teinte plate, ledit procédé comprenant en outre :

   - une étape de pivotement (E1) de l'écran d'affichage d'une position initiale correspondant à ladite direction privilégiée d'observation vers une position, dite position pivotée,

- une étape de détection (E2) de l'angle α de pivotement dudit écran d'affichage entre ladite position initiale et ladite position pivotée,

- une étape de rotation (E3) desdites N images élémentaires formant les N points de vue d'un angle inverse dudit angle α de pivotement détecté,

- une étape d'imbrication (E4) des N images élémentaires pivotées selon ledit schéma de mixage des N images élémentaires dans ladite position initiale,

- une étape d'affichage (E5) desdites N images élémentaires pivotées sur ledit écran d'affichage de telle sorte qu'un observateur puisse percevoir, sur ledit écran pivoté, une image en relief s'étendant le long de ladite direction privilégiée, formée de couples de points de vue successifs différents dans ladite série de points de vue, et projetés respectivement vers l'oeil droit et l'oeil gauche de l'observateur, dans le cas où le dit angle α détecté est tel que le déphasage D de points de vue entre les deux yeux de l'observateur calculé par la formule D = DIY/BSy $*$ (cos(α)/tan(α) + sin (α)), où DIY représente la distance inter-pupillaire de l'observateur et BSy représente la base stéréoscopique du système en Y, relié à la base stéréoscopique du système en X par la formule BSx = tan(α0) $*$ BSy, est supérieur à 1 en valeur absolu.

2. Procédé selon la revendication 1, **caractérisé en ce que**, lesdits couples de points de vue projetés vers ledit observateur dans ladite direction privilégiée dépendant d'une distance, dite base stéréoscopique, correspondant à la distance à parcourir suivant ladite direction privilégiée par l'observateur à ladite distance de teinte plate, pour passer d'un point de vue à l'autre, il comprend en outre une étape de calcul (E6) d'une base stéréoscopique modifiée dépendant dudit angle α de pivotement détectée pour que les couples de points de vue projetés vers l'observateur par ledit composant optique dans ladite position pivotée soient identiques à ceux projetés dans ladite direction privilégiée, à ladite position initiale, de manière à pouvoir maintenir pour l'observateur une sensation de relief identique en face de l'écran pivoté dudit angle de pivotement qu' en face de l'écran avant pivotement, à l'exception des pivotements de l'écran qui font coïncider l'axe des yeux de l'observateur avec l'axe des lentilles du réseau lenticulaire.

3. Procédé selon l'une des revendications 1 ou 2, **caractérisé en ce qu'**il comprend en outre une étape de détection de l'axe reliant les deux yeux (OD, OG) d'un observateur de manière à pouvoir définir ladite direction privilégiée par rapport à cet axe.

4. Procédé selon l'une des revendications 1 à 3 , **caractérisé en ce que** ladite étape de détection (E2) de l'angle α de pivotement dudit écran d'affichage entre ladite position initiale et ladite position pivotée comprend une étape de détection, à chaque instant, de l'axe reliant les deux yeux (OD, OG) d'un observateur de manière à pouvoir définir l'angle entre ladite direction initiale et l'axe reliant les deux yeux de l'observateur, cet angle formant l'angle α de pivotement.

5. Procédé selon l'une des revendications 1 à 4, **caractérisé en ce que** ledit schéma de mixage prédéterminé consiste à décaler d'une ligne à l'autre de la matrice de pixels chaque point de vue d'un sous pixel de couleur différente par rapport à sa position sur la ligne précédente et **en ce que** ledit angle α0 est de l'ordre de 18° par rapport à la direction privilégiée.

6. Procédé selon l'une des revendications 1 à 4, **caractérisé en ce que** ledit schéma de mixage prédéterminé consiste à décaler d'une ligne à l'autre de la matrice de pixels chaque point de vue de deux sous-pixels de couleurs différentes par rapport à sa position sur la ligne précédente et **en ce que** ledit angle α0 est de l'ordre de 33° par rapport à la direction privilégiée.

7. Système (8) d'affichage d'une image auto-stéréoscopique comprenant une série de N points de vue numérotés successivement de 1 à N et formés de N images élémentaires imbriquées selon un mixage prédéterminé comprenant :

- un écran (10) d'affichage mobile en rotation autour d'un axe virtuel ou réel s'étendant perpendiculaire au plan d'affichage de l'écran, ledit écran comprenant une matrice de pixels agencés par lignes et par colonnes, chaque pixel étant composé d'une pluralité de sous-pixels de couleurs différentes affectés chacun à un point de vue de l'image

**caractérisé en ce qu'**il comprend en outre :

- un composant optique (11) monté sur ledit écran, du type réseau de lenticules cylindriques ou barrière de parallaxe, d'axe principal incliné d'un angle α0 non nul par rapport à la direction des colonnes, et configuré pour permettre, lorsque ledit écran est orienté selon une direction privilégiée d'observation dans une position, dite position initiale, la projection de couples prédéterminés de points de vue différents formés de deux points de vue séparés l'un de l'autre, dans la série des N points de vue, d'au moins un point de vue, respectivement à l'œil gauche et l'œil droit d'un observateur, situé à une distance nominale de l'écran, dite distance de teinte plate,
- des moyens de détection (12) d'un angle α de pivotement dudit écran d'affichage entre ladite position initiale et une position pivotée,
- un module de rotation desdites N images élémentaires formant les N points de vue d'un angle inverse dudit angle α de pivotement détecté,
- un module de mixage desdites N images élémentaires pivotées selon ledit schéma de mixage des N images élémentaires dans ladite position initiale,
- un module d'affichage (14) desdites N images élémentaires pivotées sur ledit écran d'affichage de telle sorte qu'un observateur puisse percevoir, sur ledit écran pivoté, une image en relief s'étendant le long de ladite direction privilégiée, formée de couples de points de vue successifs différents dans ladite série de points de vue, et projetés respectivement vers l'oeil droit et l'oeil gauche de l'observateur, dans le cas où le dit angle α détecté est tel que le déphasage D de points de vue entre les deux yeux de l'observateur calculé par la formule $D = DIY/BSy * (\cos(\alpha)/\tan(\alpha) + \sin(\alpha))$, où DIY représente la distance inter-pupillaire de l'observateur et BSy représente la base stéréoscopique du système en Y, relié à la base stéréoscopique du système en X par la formule $BSx = \tan(\alpha 0) * BSy$, est supérieur à 1 en valeur absolu.

8. Système selon la revendication 7, **caractérisé en ce que**, lesdits couples de points de vue projetés vers ledit observateur dans ladite direction privilégiée dépendant d'une distance, dite base stéréoscopique, correspondant à la distance à parcourir suivant ladite direction privilégiée par l'observateur à ladite distance de teinte plate, pour passer d'un point de vue à l'autre, il comprend en outre un module de calcul (E6) d'une base stéréoscopique modifiée dépendant dudit angle α de pivotement détectée pour que les couples de points de vue projetés vers l'observateur par ledit composant optique dans ladite position pivotée soient identiques à ceux projetés dans la position initiale dans ladite direction privilégiée, de manière à pouvoir maintenir pour l'observateur une sensation de relief identique en face de l'écran pivoté dudit angle de pivotement qu' en face de l'écran avant pivotement en position initiale.

9. Système selon l'une des revendications 7 ou 8, **caractérisé en ce qu'**il comprend en outre des moyens de détection de l'axe reliant les deux yeux (OD, OG) d'un observateur de manière à pouvoir définir ladite direction privilégiée par rapport à cet axe.

10. Système selon l'une des revendications 7 à 9, **caractérisé en ce que** lesdits moyens de détection (13) d'un angle α de pivotement comprennent un dispositif de détection, à chaque instant, de la position des yeux de l'observateur de manière à pouvoir définir l'angle entre ladite direction initiale et l'axe reliant les deux yeux de l'observateur, cet angle formant l'angle α de pivotement et définissant ladite direction privilégiée d'observation.

11. Système selon l'une des revendications 7 à 10, **caractérisé en ce que** lesdits moyens de détection (13) d'un angle α de pivotement du dudit écran d'affichage entre ladite position privilégiée et une position pivotée comprennent une centrale inertielle solidaire dudit écran (10) d'affichage.

12. Système selon l'une des revendications 7 à 11, **caractérisé en ce que** ledit écran d'affichage (10) est un écran à 8 points de vue.

13. Système selon l'une des revendications 7 à 12, **caractérisé en ce que** ledit écran d'affichage est un écran d'affichage d'une tablette tactile ou d'un smartphone.

**Patentansprüche**

1. Verfahren zur Anzeige eines autostereoskopischen Bildes, das eine Reihe von N Blickpunkten umfasst, die nacheinander von 1 bis N nummeriert sind und aus N Elementarbildern gebildet werden, die gemäß einem bestimmten Mischschema verschachtelt sind, auf einem mobilen Anzeigebildschirm, der sich um eine virtuelle oder reale Achse schwenkt, die sich senkrecht zur Anzeigeebene des Schirms erstreckt, wobei der Schirm ein Netz von Pixeln umfasst, die in Zeilen und Spalten angeordnet sind, wobei jedes Pixel aus mehreren verschiedenen Unterpixeln mit unterschiedlichen Farben zusammengesetzt ist, die jeweils einen Blickpunkt des Bildes bilden, wobei der Schirm zudem von einer optischen Komponente (11) überlagert ist, vom Typ eines zylindrischen linsenförmigen Netzwerks oder einer Parallaxenschranke, mit einer Hauptachse, die in einem von Null verschiedenen Winkel α0 in Bezug auf die Richtung der Spalten geneigt ist, und die ausgestaltet ist, dass sie, wenn der Bildschirm in einer bevorzugten Beobachtungsrichtung (20) ausgerichtet ist, die Projektion von bestimmten Paaren von verschiedenen Blickpunkten, die von zwei voneinander getrennten Blickpunkten gebildet werden, in der Reihe von N Blickpunkten von mindestens einem Blickpunkt entsprechend auf das linke Auge und das rechte Auge eines Beobachters ermöglicht, die sich in einem nominellen Abstand vom Bildschirm befinden, der als einheitlicher Farbabstand bezeichnet wird, wobei das Verfahren zudem umfasst:

- einen Schritt des Schwenkens (E1) des Anzeigebildschirms aus einer Ausgangsposition, die der bevorzugten Beobachtungsrichtung entspricht, in eine Position, die als geschwenkte Position bezeichnet wird,

- einen Schritt des Erfassens (E2) des Schwenkwinkels $\alpha$ des Anzeigebildschirms zwischen der Ausgangsposition und der geschwenkten Position,

- einen Schritt des Drehens (E3) der N Elementarbilder, die die N Blickpunkte eines inversen Winkels des erfassten Schwenkwinkels $\alpha$ bilden,

- einen Schritt der Verschachtelung (E4) der N Elementarbilder, die gemäß dem Mischschema der N Elementarbilder in der Ausgangsposition gedreht wurden,

- einen Schritt des Anzeigens (E5) der N gedrehten Elementarbilder auf dem Anzeigebildschirm, so dass ein Beobachter auf dem geschwenkten Schirm ein Reliefbild wahrnehmen kann, das sich entlang der bevorzugten Richtung erstreckt, das aus Paaren von verschiedenen aufeinanderfolgenden Blickpunkten in der Reihe von Blickpunkten gebildet ist und auf das rechte bzw. das linke Auge des Beobachters projiziert wird, wobei der erfasste Winkel so ist, dass die Phasenverschiebung D der Blickpunkte zwischen den beiden Augen des Beobachters, die durch die Formel D = DIY/BSy * $(\cos(\alpha)/\tan(\alpha) + \sin(\alpha))$ berechnet wird, wobei DIY den Pupillenabstand des Beobachters ist und BSy die stereoskopische Basis des Y-Systems ist, die mit der stereoskopischen Basis des X-Systems durch die Formel BSx = $\tan(\alpha0)$ + BSy verbunden ist, ein absoluter Wert größer 1 ist.

2. Verfahren nach Anspruch 1, **dadurch gekennzeichnet, dass** die Blickpunktpaare in Richtung des Beobachters in der bevorzugten Richtung in Abhängigkeit von einem Abstand, der als stereoskopische Basis bezeichnet wird, projiziert werden, der dem Abstand entspricht, den der Beobachter entlang der bevorzugten Richtung bis zu dem einheitlichen Farbabstand zurücklegen muss, um von einem Blickpunkt zum anderen zu gelangen; es zudem eine Berechnung einer modifizierten stereoskopischen Basis in Abhängigkeit von dem erfassten Schwenkwinkel $\alpha$ durch ein Modul (E6) umfasst, so dass die von der optischen Komponente in der geschwenkten Position auf den Beobachter projizierten Blickpunktpaare identisch mit den in der Ausgangsposition in der bevorzugten Richtung projizierten sind, um für den Betrachter eine identische Reliefempfindung vor dem geschwenkten Bildschirm des Schwenkwinkels vor dem Bildschirm vor dem Schwenken aufrechtzuerhalten, mit Ausnahme des Schwenkens des Bildschirms, was dazu führt, dass die Achse der Augen des Betrachters mit der Achse der Linsen des linsenförmigen Netzwerks zusammenfällt.

3. Verfahren nach einem der Ansprüche 1 oder 2, **dadurch gekennzeichnet, dass** es zudem einen Schritt zur Erfassung der Achse zwischen den Augen (RE, LE) eines Beobachters umfasst, um die bevorzugte Richtung in Bezug auf diese Achse zu definieren.

4. Verfahren nach einem der Ansprüche 1 bis 3, **dadurch gekennzeichnet, dass** der Schritt der Erfassung (E2) des Schwenkwinkels $\alpha$ des Anzeigebildschirms zwischen der Ausgangsposition und der geschwenkten Position einen Schritt der Erfassung der Achse zwischen den Augen (RE, LE) eines Beobachters zu jedem Zeitpunkt umfasst, um den Winkel zwischen der Ausgangsrichtung und der Achse zwischen den Augen des Beobachters definieren zu können, wobei dieser Winkel den Schwenkwinkel $\alpha$ bildet.

5. Verfahren nach einem der Ansprüche 1 bis 4, **dadurch gekennzeichnet, dass** das bestimmte Mischschema darin besteht, dass jeder Blickpunkt eines Unterpixels mit einer anderen Farbe in Bezug auf seine Position auf der vorhergehenden Zeile von einer Zeile zur anderen der Pixelmatrix verschoben wird, und wobei der Winkel $\alpha0$ in der Größenordnung von 18° in Bezug auf die bevorzugte Richtung liegt.

6. Verfahren nach einem der Ansprüche 1 bis 4, **dadurch gekennzeichnet, dass** das bestimmte Mischschema darin besteht, dass jeder Blickpunkt von zwei Unterpixeln unterschiedlicher Farben relativ zu seiner Position auf der vorhergehenden Zeile von einer Zeile zur anderen der Pixelmatrix verschoben wird, und wobei der Winkel $\alpha0$ in der Größenordnung von 33° in Bezug auf die bevorzugte Richtung liegt.

7. System (8) zum Anzeigen eines autostereoskopischen Bildes, das eine Reihe von N Sichtpunkten umfasst, die nacheinander von 1 bis N nummeriert sind und aus N Elementarbildern gebildet werden, die gemäß einem bestimmten Mischschema verschachtelt sind, worin das System umfasst:

- einen mobilen Anzeigebildschirm (10), der sich um eine virtuelle oder reale Achse dreht, die sich senkrecht zur Anzeigeebene des Schirms erstreckt, wobei der Schirm ein Netz von Pixeln umfasst, die in Zeilen und Spalten angeordnet sind, wobei jedes Pixel aus mehreren Unterpixeln mit unterschiedlichen Farben zusammengesetzt ist, die jeweils einem Blickpunkt des Bildes zugeordnet sind;

**dadurch gekennzeichnet, dass** es zudem umfasst:

- eine auf dem Bildschirm montierte optische Komponente (11) vom Typ eines zylindrischen linsenförmigen Netzwerks oder einer Parallaxenschranke mit einer Hauptachse, die in einem von Null verschiedenen Winkel $\alpha_0$ gegenüber der Richtung der Säulen geneigt ist, und die ausgestaltet ist, dass es, wenn der Bildschirm gemäß einer bevorzugten Beobachtungsrichtung in einer Position, der so genannten Ausgangsposition, ausgerichtet ist die Projektion bestimmter Paare verschiedener Blickpunkte, die aus zwei Blickpunkten gebildet werden, die in der Reihe von N Blickpunkten durch mindestens einen Blickpunkt, jeweils auf das linke bzw. das rechte Auge eines Beobachters voneinander getrennt sind, der sich in einem Nennabstand vom Bildschirm, dem sogenannten einheitlichen Farbabstand, befindet;
- Mittel zum Erfassen (12) eines Schwenkwinkels $\alpha$ des Anzeigebildschirms zwischen der Ausgangsposition und einer geschwenkten Position,
- ein Modul für die Drehung der N Elementarbilder, die die N Blickpunkte eines inversen Winkels des erfassten Schwenkwinkels $\alpha$ bilden,
- ein Modul zum Mischen der N Elementarbilder, die gemäß dem Mischschema der N Elementarbilder in der Ausgangsposition geschwenkt wurden,
- ein Modul zur Anzeige (14) der N Elementarbilder, die auf dem Anzeigebildschirm geschwenkt werden, so dass ein Beobachter, auf dem geschwenkten Schirm, ein Reliefbild wahrnehmen kann, das sich entlang der bevorzugten Richtung erstreckt, das aus Paaren von aufeinanderfolgenden unterschiedlichen Blickpunkten in der Reihe von Blickpunkten gebildet und auf das rechte bzw. das linke Auge des Beobachters projiziert wird, wobei der erfasste Winkel so ist, dass die Phasenverschiebung D der Blickpunkte zwischen den beiden Augen des Beobachters, die durch die Formel $D = DIY/BSy * (\cos(\alpha)/\tan(\alpha) + \sin(\alpha))$ berechnet wird, wobei DIY den Pupillenabstand des Beobachters ist und BSy die stereoskopische Basis des Y-Systems ist, die mit der stereoskopischen Basis des X-Systems durch die Formel $BSx = \tan(\alpha_0) + BSy$ verbunden ist, ein absoluter Wert größer 1 ist.

8. System nach Anspruch 7, **dadurch gekennzeichnet, dass** die Blickpunktpaare in Richtung des Beobachters in der bevorzugten Richtung in Abhängigkeit von einem Abstand, der als stereoskopische Basis bezeichnet wird, projiziert werden, der dem Abstand entspricht, den der Beobachter entlang der genannten Vorzugsrichtung bis zu dem einheitlichen Farbabstand zurücklegen muss, um von einem Blickpunkt zum anderen zu gelangen; das System zudem ein Modul (E6) zur Berechnung einer modifizierten stereoskopischen Basis in Abhängigkeit von dem erfassten Schwenkwinkel $\alpha$ umfasst, so dass die durch die optische Komponente in der geschwenkten Position auf den Betrachter projizierten Blickpunktpaare identisch mit denen sind, die in der Ausgangsposition in der bevorzugten Richtung projiziert werden, um für den Betrachter einen identischen Eindruck des Reliefs vor dem geschwenkten Bildschirm des Schwenkwinkels vor dem Bildschirm vor dem Schwenken in die Ausgangsposition aufrechterhalten zu können.

9. System nach einem der Ansprüche 7 oder 8, **dadurch gekennzeichnet, dass** es zudem ein Mittel zur Erfassung der Achse zwischen den Augen (OD, OG) eines Betrachters umfasst, um die Vorzugsrichtung in Bezug auf diese Achse zu definieren.

10. System nach einem der Ansprüche 7 bis 9, **dadurch gekennzeichnet, dass** die Mittel (13) zur Erfassung eines Schwenkwinkels $\alpha$ eine Vorrichtung umfassen, um zu jedem Zeitpunkt die Position der Augen des Beobachters derart zu erfassen, dass der Winkel zwischen der Ausgangsrichtung und der Achse zwischen den Augen des Beobachters definiert werden kann, wobei dieser Winkel den Schwenkwinkel $\alpha$ bildet und die bevorzugte Beobachtungsrichtung definiert.

11. System nach einem der Ansprüche 7 bis 10, **dadurch gekennzeichnet, dass** die Mittel (13) zum Erfassen eines Schwenkwinkels $\alpha$ des Anzeigebildschirms zwischen der bevorzugten Position und einer geschwenkten Position eine Trägheitseinheit umfassen, die in dem Bildschirm (10) integriert ist.

12. System nach einem der Ansprüche 7 bis 11, **dadurch gekennzeichnet, dass** der Anzeigebildschirm (10) ein 8-Punkt-Bildschirm ist.

13. System nach einem der Ansprüche 7 bis 12, **dadurch gekennzeichnet, dass** der Anzeigebildschirm ein Anzeigebildschirm eines Touch-Tablets oder Smartphones ist.

## Claims

1. A method of displaying an auto stereoscopic image comprising a series of N points of view numbered successively from 1 to N and formed of N elementary images interlaced according to a predetermined mixing scheme, on a mobile display screen rotating around a virtual or real axis extending perpendicularly to the display plane of the screen, said screen comprising an array of pixels arranged by rows and columns, each pixel being composed of multiple different sub-pixels of different colors each forming one point of view of the image, said screen being further overlaid by an optical component (11), of the cylindrical lenticular network or parallax barrier type, with a main axis inclined at an non-zero angle αo with respect to the direction of the columns, and configured to allow, when said screen is oriented in a preferred direction of observation (20), the projection of predetermined pairs of different points of view formed from two points of view separated from each other, in the series of N points of view, of at least one point of view, respectively to the left eye and the right eye of an observer, located at a nominal distance from the screen, called the uniform tint distance, said method further comprising:

- a stage for pivoting (E1) of the display screen from an initial position corresponding to said preferred direction of observation to a position, called the rotated position,
- a stage for detecting (E2) the pivot angle α of said display screen between said initial position and said rotated position,
- a stage for rotating (E3) of said N elementary images forming the N points of view of an inverse angle of said detected pivot angle α,
- an stage for interlacing (E4) of the N elementary images rotated according to said mixing scheme of the N elementary images in said initial position,
- a stage for displaying (E5) said N pivoted elementary images on said display screen so that an observer can perceive, on said rotated screen, a relief image extending along said preferred direction, formed of pairs of different successive points of view in said series of points of view, and projected to the right eye and the left eye of the observer, respectively, in case the detected pivot angle α is such that the phase shift D of points of view between the two eyes of the observer, determined by the equation $D = DIY/BSy * (\cos(\alpha)/\tan(\alpha) + \sin(\alpha))$, where DIY designates the distance between the two eyes of the observer and BSy refers to the stereoscopic base of the Y system, linked to the stereoscopic base of the X-axis system by the formula $BSx = \tan(\alpha 0) * BSy$, is greater than 1 in absolute value.

2. Method according to claim 1, **characterized in that** said pairs of points of view projected towards said observer in said preferred direction depending on a distance, called the stereoscopic base, corresponding to the distance to be traveled along said preferred direction by the observer to said uniform tint distance, to pass from one point of view to the other; it further comprises a module (E6) to calculate a modified stereoscopic base depending on said detected pivot angle α so that the pairs of points of view projected towards the observer by said optical component in said rotated position are identical to those projected in the initial position in said preferred direction, so as to be able to maintain for the observer an identical sensation of relief in front of the rotated screen of said pivot angle in front of the screen before pivoting, except for pivoting of the screen which causes the axis of the observer's eyes to coincide with the axis of the lenses of the lenticular network.

3. Method according to one of claims 1 or 2, **characterized in that** it further comprises a step for detecting the axis between the eyes (RE, LE) of an observer so as to define said preferred direction with respect to this axis.

4. Method according to one of claims 1 to 3, **characterized in that** said stage for detecting (E2) the pivot angle α of said display screen between said initial position and said rotated position comprises a stage for the detection, at each moment, of the axis between the eyes (RE, LE) of an observer so as to be able to define the angle between said initial direction and the axis between the eyes of the observer, this angle forming the pivot angle α.

5. Method according to one of claims 1 to 4, **characterized in that** said predetermined mixing scheme consists of shifting from one line to another of the pixel matrix each point of view of a sub-pixel of different color with respect to its position on the preceding line and wherein said angle αo is in the order of 18° with respect to the preferred direction.

6. Method according to one of claims 1 to 4, **characterized in that** said predetermined mixing scheme consists of shifting from one line to another of the pixel matrix each point of view of two sub-pixels of different colors relative to its position on the preceding line and wherein said angle αo is in the order of 33° with respect to the preferred direction.

7. System (8) for displaying an autostereoscopic image comprising a series of N points of view numbered successively from 1 to N and formed of N elementary images interlaced according to a predetermined mixing scheme comprising:

- a mobile display screen (10) in rotation about a virtual or real axis extending perpendicularly from the display plane of the screen, said screen comprising an array of pixels arranged in rows and columns, each pixel being composed of multiple subpixels of different colors each assigned to a point of view of the image

**characterized in that** it further comprises:

- an optical component (11) mounted on said screen, of the cylindrical lens network or parallax barrier type, with a main axis inclined at an non-zero angle $\alpha o$ with respect to the direction of the columns, and configured to allow, when said screen is oriented according to a preferred direction of observation in a position, called the initial position, the projection of predetermined pairs of different points of view formed from two points of view separated from each other, in the series of N points of view, by at least one point of view, respectively to the left eye and the right eye of an observer, located at a nominal distance from the screen, called the uniform tint distance,

- means for detecting (12) a pivot angle $\alpha$ of said display screen between said initial position and a rotated position,

- a module for the rotation of said N elementary images forming the N points of view of an inverse angle of said detected pivot angle $\alpha$,

- a module for the mixing of said N elementary images rotated according to said mixing scheme of the N elementary images in said initial position,

- a module for the display (14) of said N elementary images rotated on said display screen so that an observer can perceive , pivoted on said screen, a relief image extending along said preferred direction, formed of pairs of successive different perspectives in said series of points of view and projected to the right eye and the left eye of the observer, respectively, in case the detected pivot angle $\alpha$ is such that the phase shift D of points of view between the two eyes of the observer, determined by the equation $D = DIY/BSy * (\cos(\alpha)/\tan(\alpha) + \sin(\alpha))$, where DIY designates the distance between the two eyes of the observer and BSy refers to the stereoscopic base of the Y system, linked to the stereoscopic base of the X-axis system by the formula $BSx = \tan(\alpha0) * BSy$, is greater than 1 in absolute value.

8. System according to claim 7, **characterized in that** said pairs of points of view projected towards said observer in said preferred direction depending on a distance, called the stereoscopic base, corresponding to the distance to be traveled along said preferred direction by the observer to said uniform tint distance, to pass from one point of view to the other; it further comprises a module (E6) to calculatte a modified stereoscopic base depending on said detected pivot angle $\alpha$ so that the pairs of points of view projected towards the observer by said optical component in said rotated position are identical to those projected in the initial position in said preferred direction, so as to be able to maintain for the observer an identical sensation of relief in front of the rotated screen of said pivot angle in front of the screen before pivoting to the initial position.

9. System according to one of claims 7 or 8, **characterized in that** it further comprises a means for detecting the axis between the eyes (OD, OG) of an observer so as to define said preferred direction with respect to this axis.

10. System according to one of claims 7 to 9, **characterized in that** said means (13) for detecting a pivot angle $\alpha$ comprising a device for detecting, at each moment, the position of the observer's eyes in such a way that the angle between said initial direction and the axis between the eyes of the observer may be defined, this angle forming the pivot angle $\alpha$ and defining said preferred direction of observation.

11. System according to one of claims 7 to 10, **characterized in that** said means (13) for detecting a pivot angle $\alpha$ of said display screen between said preferred position and a rotated position comprise an inertial unit integral with said screen (10) display.

12. System according to one of claims 7 to 11, **characterized in that** said display screen (10) is an 8-point screen.

13. System according to one of claims 7 to 12, **characterized in that** said display screen is a display screen of a touch tablet or smartphone.

Figure 1

Figure 2

Figure 3a

Figure 3c

Figure 5

Figure 6

Figure 7a

Figure 7b

Figure 7c

Figure 8a

Figure 8b

Figure 8c

Figure 9a

Figure 9b

Figure 9c

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2006024764 A1
- WO 2014041504 A1
- WO 2013140363 A1
- WO 2014016768 A1
- EP 2876879 A1
- FR 2018050563 W